# EUROPEAN PATENT APPLICATION

(11) **EP 4 686 590 A1**
(43) Date of publication of application: **04.02.2026**
(21) Application number: 24192517.1
(22) Date of filing: 02.08.2024
(51) Int. Cl.: B60J 7/00, B60J 1/20

(54) **A DIRECT DRIVEN ROLLER BLIND ASSEMBLY**

(71) Applicant: Inalfa Roof Systems Group B.V., 5807 GW Oostrum (NL)
(72) Inventor: CUSTERS, Jur Johannes Maria, 5807 GW Oostrum (NL); VAN BOXTEL, Eduardus Christianus Henricus, 5807 GW Oostrum (NL); TEN-JET-FOEI, Suyanto Teri Wahiyu, 5807 GW Oostrum (NL)
(74) Representative: De Vries & Metman

(57) **Abstract**

The present invention relates to a roller blind assembly and to a roller blind assembly comprising a set of guidance members for guiding a tensioning wire with a controlled angle from and onto a wire pulley. The invention further relates to a roof assembly comprising such a roller blind assembly, and a vehicle comprising said roof assembly.

## Description

The present invention relates to a roller blind assembly and a roller blind assembly comprising a set of guidance members for guiding a tensioning wire with a controlled angle from and onto a wire pulley. The invention further relates to a roof assembly comprising such a roller blind assembly, and a vehicle comprising said roof assembly.

### BACKGROUND

Vehicles, such as e.g. passenger cars, may be equipped with a roof or roof system having one or more roof panels. The roof panels may be movable between closed and open positions wherein a roof opening is covered or uncovered, or the roof panels may be fixed. In either case, one or more of the roof panels may be transparent to allow light to enter a passenger compartment of the vehicle. In order to be able to control the amount of light entering, the vehicle may be equipped with a roller blind assembly including a blind screen that is movable between closed and open positions, and any position therebetween i.e. partially closed or partially open. The roller blind assembly may also be referred to as a rollo assembly, likewise a blind screen may be referred to as a roller screen or rollo screen. Movement of the blind screen is enabled by wounding on or off a winding tube or shaft. In a fully opened position, the blind screen is completely wound upon the winding tube. In the closed position, the blind screen is, almost, completely wound off from the winding tube.

In known roller blind assemblies the blind screen may be operated by drive cables driven by a motor, which drive cables are connected via slide shoes to an operating beam of the blind screen. The operating beam may also be referred to as a pull beam, as it may pull the blind screen, or it may further be referred to as a front beam, this in relation to its position relative to the front of the vehicle. The motor will drive movement of the drive cables, thereby moving the drive shoes and connected operating beam. Hence, pulling the operating beam away from the winding tube will roll off the blind screen from the winding tube. Whereas pulling the operating beam towards the winding tube, will allow the blind screen to wind up on the winding tube. Thereto, the winding tube is usually provided with a spring-like assembly to enable the winding when uncovering the roof opening by the blind screen.

Alternatively, roller blind assemblies may be provided wherein the movement of the blind screen is operated by a motor directly driving the winding tube of the blind screen instead of via drive cables. In order to keep the blind screen taut in every position that the operating beam may be in, between a fully unrolled and fully rolled up blind screen, a tensioning wire is provided between the winding tube and the operating beam. More particularly, a wire pulley is provided on the winding tube to which the one end of tensioning wire is attached. The other end of the tensioning wire is attached to the operating beam or to a spring provided inside the operating beam. The tensioning wire may be wound or unwound on the wire pulley upon operation of the blind screen.

Such a direct driven roller blind assemblies offer improvements with respect to noise, vibration and harshness as well as operating behavior and costs. However, as the wire pulley and the drive motor are packaged next to the winding tube of the blind screen, the entire roller blind assembly may be wider than conventional roller blind assemblies operated by drive cables.

Moreover, if the entire roof system with a direct driven roller blind assembly further comprises components such as a wind deflector mechanism, the roller blind assembly may be packaged within a separate space inside the inner area of the other components resulting in a narrower daylight opening in the transversal direction of the vehicle. To maintain a wider daylight opening in said transversal direction, the roller blind assembly and further roof components may be packaged next to each other in a combined space which results in a large step within transversal direction between the tensioning wire and the wire pulley. This creates either a large angle for the tensioning wire to roll onto the wire pulley or requires a large distance in the longitudinal direction of the vehicle to mitigate said angle. As the distance in the longitudinal direction is bound by the dimensions of the vehicle, the latter is typically not an option.

The large angle between the tensioning wire and the wire pulley can lead to a multitude of issues, including noise issues, which must be mitigated otherwise. In particular, the wire pulley typically has a cylindrical or conical shape and is provided with a spiral-shaped winding groove. If the angle between the tensioning wire and the wire pulley, as seen from above, becomes too large the tensioning wire may not properly be positioned within the winding groove and thus may rattle or, even worse, fall off the groove. As such, there is a need for reducing, or at least controlling, the angle between the tensioning wire and the wire pulley. It is therefore an object of the invention to provide a direct driven roller blind assembly wherein the angle between the tension wire and the wire pulley is reduced and/or controlled.

### SUMMARY OF INVENTION

The object of the invention is achieved by providing a roller blind assembly for a vehicle wherein the roller blind assembly comprises a frame for mounting the roller blind assembly to a roof of a vehicle, at least one guide rail provided on a side of the frame extending in a longitudinal direction, a winding tube provided at a rear side of the frame extending in a transversal direction substantially perpendicular to the guide rail, a blind screen having a first end attached to the winding tube to be wound onto and off said winding tube in a mainly longitudinal direction, an operating beam attached to a second end of the blind screen, at least one wire pulley attached to an outer end of the winding tube, and a tensioning wire having a first end attached to the wire pulley and a second end attached to the operating beam to be wound onto and off said wire pulley, wherein a set of guidance members for guiding the tensioning wire is provided at an end portion of the guide rail near the wire pulley, wherein a first guidance member guides the tensioning wire from the wire pulley towards a second guidance member, wherein the second guidance member guides the tensioning wire from the first guidance member towards of the operating beam through the longitudinal guide rail, and wherein the first guidance member is distanced further away from the wire pulley than the second guidance member such that an angle at which the tensioning wire runs to and from the wire pulley is limited to a controlled range during winding and unwinding of the tensioning wire .

The frame for mounting the roller blind assembly may comprise only the roller blind assembly such as a cassette comprising the winding tube and a guide rail for guiding the blind screen. The frame may also comprise additional components such as the drive motor, a control unit for operating the roller blind assembly, a wind deflector and/or a mechanism to hold a roof panel.

The guide rail extends in the longitudinal direction to guide the blind screen along the longitudinal direction when the roller blind assembly is being operated. Preferably, a guide rail is provided on each side of the frame. The guide rail may comprise multiple guiding channels for guiding other components than the blind screen, such as the tensioning wire. The guide rail may comprise a lead-in for the blind screen side edge to guide it into the guide.

The winding tube may comprise a shaft mounted on supports for rotating the winding tube. A motor may be provided at the end of the winding tube or onto the shaft to rotate the winding tube. The motor may be an L-shaped motor. Two motors may be provided, one on each end of the winding tube.

The blind screen has a first end attached to the winding tube to enable the blind screen to be wound onto and off the winding tube. The blind screen may be attached by any suitable means of attachment.

The operating beam is attached to a second end of the blind screen, opposite of the first end of the blind screen attached to the winding tube. The operating beam may be a rod-shaped beam or a flattened beam. The operating beam may comprise a spring element within the inner side. The operating beam may also be a solid beam without a sprint element within the inner side.

The wire pulley may have a cylindrical or conical shape. Preferably, the wire pulley has a conical shape and is provided with a spiral-shaped winding groove for winding a tensioning wire such that the (un)winding diameter of the tensioning wire on the wire pulley is always substantially equal to the (un)winding diameter of the blind screen on the winding tube.

The tensioning wire has a first end attached to the wire pulley and a second end attached to the operating beam, wherein the second end may be attached to a side of the operating beam or to a spring element provided within the inner side of the operating beam. When the tensioning wire is attached to a side of the operating beam, and when the operating beam does not comprise a spring element within the inner side of the operating beam, a spring assembly may be provided separately to keep the tensioning wire under tension within the roller blind assembly. The tensioning wire together with the operating beam enables the blind screen to be taut during operation of the roller blind assembly.

During operation, the tensioning wire is wound on to, and off from, the wire pulley following the spiral-shaped winding groove. The tensioning wire should be properly positioned within the winding groove without crossing the flanges of the winding groove too much to prevent major operating issues. When looking from above, in the XY-plane of the assembly, the tensioning wire thus should make a relatively smooth angle with the wire pulley. This angle varies within a certain range as the tensioning wire is wound or unwound onto or from the wire pulley. Thus, a set of guidance members is provided to guide the tensioning wire with a controlled angle between the wire pulley and the operating beam, in particular from the wire pulley towards an end portion of the guide rail so that the tensioning wire may be positioned parallel to the guide rail and the blind screen from said end portion towards the position of the operating beam. In known configurations, where only a single guidance member is provided to guide the tensioning wire, which leads to relatively sharp angles between the wire pulley and the end portion of the guide rail. This may cause the tensioning wire to run off from the winding groove due to the sharp angle. Therefore, in the configuration according to the invention, the first guidance member guides the tensioning wire in a relatively smooth angle toward the second guidance member while the second guidance member guides the tensioning wire towards the end portion of the guide rail to position the tensioning wire parallel to the guide rail. As such, it is the set of guidance members that allow for controlled angles as the first guide member may be positioned along the longitudinal direction of the roller blind assembly to create a sufficient distance between the first guide member and the wire pulley, without needing too much space in the transversal direction, while the second guide member may be positioned to create a parallel positioning of the tensioning wire along the guide rail.

In an embodiment, two guide rails are provided, one on each side of the frame extending in a longitudinal direction and opposite of each other. Having two guide rails provided in a symmetrical fashion, the blind screen is guided more securely within the roller blind assembly.

In an embodiment, two wire pulleys are provided, one on each side of the winding tube, and wherein two tensioning wires are provided, each attached to one of the wire pulleys, and wherein two sets of guidance members are provided, each set provided at an end portion of each guide rail. This allows for a more secured handling of the roller blind assembly in addition to the use of two guide rails.

In an embodiment, the angle of the tensioning wire with the wire pulley within the XY-plane preferably ranges from 0° to 7° in the XY-plane.

When looking at the tensioning wire in relation to the wire pulley from above, in the XY-plane, the tensioning wire ideally is wound around the wire pulley from a straight angle. In other words, the tensioning wire ideally is perpendicular to the wire pulley axle thus making a 0° angle with the wire pulley. Due to the width of the wire pulley and the outer positions of the guidance member guiding the tensioning wire, this preferred angle cannot be maintained during the full winding of the tensioning wire onto the wire pulley. An angle other than 0° will thus be made. To prevent the tensioning wire from rolling off from the wire pulley, the angle is preferably at most 7° in an outer position of the guidance member.

In an embodiment, the angle of the tensioning wire with the wire pulley within the XZ-plane preferably is in the range from 5° to 25° in the XZ-plane.

When looking at the tensioning wire in relation to the wire pulley from the side, in the XZ-plane, the tensioning wire makes a little angle from the guidance member towards the wire pulley to keep tension on the tensioning wire while winding the wire off, or onto, the wire pulley. At the same time, an angle too large may result in the tensioning wire to roll-off from the bottom of the wire pulley. Thus, the angle is preferably in the range from 5° to 25°.

In an embodiment, the set of guidance members are a set of guiding wheels which may move along a longitudinal direction, a transversal direction or both.

To guide the tensioning wire onto the wire pulley, the guidance members may be any member suitable to guide the wire. The guidance member may be made from plastic, metal or both. The guidance member may be for instance a ring-shaped opening like a needle eye, a fixed gutter or a rotatable wheel. To reduce the friction upon guiding, a rotatable wheel is preferred. The guiding member may move in a longitudinal direction, a transversal direction or both to accommodate for the tensioning wire angle in relation to the wire pulley.

In an embodiment, the operating beam comprises a spring element and the tensioning wire is attached to the spring element.

In an embodiment, a spring assembly is provided at a second end portion of the guide rail comprising a pair of guiding members for guiding the tensioning wire wherein a first guiding member is fixed to a spring element and a second guiding member attached to the guide rail, the spring element being fixed to a portion of the frame. This embodiment is particularly advantageous when the operating beam does not comprise sufficient room for a spring element to be provided within. As such, the spring element may be positioned elsewhere such as shown in this particular embodiment thereby enabling the first guiding member to move freely in a longitudinal direction and keeping the tensioning wire under sufficient tension to operate.

In an embodiment, the first guiding member and the spring element are provided in a guiding channel of the frame suitable for guiding a wind deflector mechanism.

In an aspect of the invention, a roof assembly for a vehicle comprising the roller blind assembly as shown above is provided, wherein the roof assembly further comprises an at least partly transparent roof panel. The roof panel may be any kind of roof panel suitable to pass light through the panel. The roof panel may for instance be a glass panel or a plastic panel.

In an embodiment, the roof panel is a fixed glass panel. An example of such a roof panel would be a panoramic glass roof.

In an embodiment, the roof panel is a movable glass panel. An example of such a roof panel is a sunroof.

In another aspect of the invention, a vehicle is provided comprising the roof assembly as described above.

Further objects, aspects, effects and details of particular embodiments of the invention are described in the following detailed description of a number of exemplary embodiments, with reference to the drawings.

### BRIEF DESCRIPTION OF DRAWINGS

By way of example only, the embodiments of the present disclosure will be described with reference to the accompanying drawings, wherein:
FIG. 1A illustrates a perspective view of an example of a vehicle roof with an open roof assembly according to the prior art;
FIG. 1B illustrates a perspective view of an example of a roller blind assembly in closed position for use with the roof assembly of Fig. 1A according to the prior art;
FIG. 1C illustrates an enlarged view of the wire pulley section of the roller blind assembly of Fig. 1B according to the prior art;
FIG. 1D illustrates a top view of the wire pulley section of the roller blind assembly of Fig. 1C according to the prior art;
FIG. 2A illustrates a top view of a wire pully section of a roller blind assembly according to the present invention;
FIG. 2B illustrates a side view of a wire pully section of a roller blind assembly according to the present invention;
FIG. 3A illustrates a side view of a spring assembly of a roller blind assembly according to an embodiment of the present invention;
FIG. 3B illustrates a perspective view of an example of a roller blind assembly comprising a spring assembly of FIG. 3A.

### DETAILED DESCRIPTION

In the following description spatial references as, for example, front, side and rear, or underneath, below and above, or forward and rearward direction and driving movement, are made with regard to the general orientation of a vehicle, such as a passenger car. And in particular to a driver behind a steering wheel of such as vehicle. In addition, X-, Y- and Z-direction will refer to a direction corresponding to length, width and height of a vehicle, or the longitudinal, transversal and vertical direction, respectively. In the figures, a forward driving movement of a vehicle may e.g. be indicated by an arow D1, pointing in a direction towards a front side of vehicle.

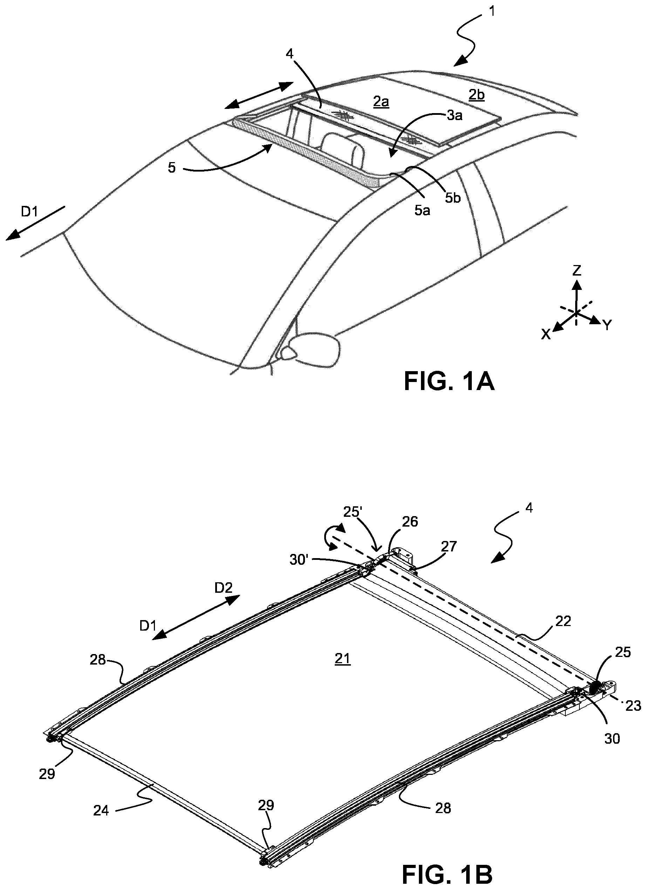

Fig. 1A illustrates a vehicle roof according to the prior art having an open roof assembly 1 arranged therein. The open roof assembly 1 includes a moveable panel 2a and a fixed panel 2b. The moveable panel 2a is also referred to as a closure member, since the moveable panel 2a is moveable over a first roof opening 3a such to enable to open and to close the first roof opening 3a. A wind deflector 5 is arranged at a front side of the first roof opening 3a, comprising a flexible material, e.g. a woven or non-woven cloth having through holes arranged therein or a web or net supported by a support structure 5a, e.g. a bar-like or tube-like structure, which structure is hingedly coupled, directly or indirectly, to a frame at a hinge 5b. Below the vehicle roof, a roller blind assembly 4 is located having a blind screen, also known as a sunscreen or sun blind, which is movable between a closed and an open position. This allows to control the amount of daylight the interior is exposed to through the roof opening 3a or, in case of a transparent panel 2a, through the panel 2a.

In Fig. 1B, the roller blind assembly 4 of Fig. 1A is shown in more detail. The roller blind assembly 4 is shown in an assembled state. As indicated, the roller blind assembly may act as a sunscreen or sun blind assembly and may be positioned below the movable roof panel 2a or, for example, below both the movable and fixed roof panel 2a, 2b.

The roller blind assembly 4 includes a blind screen 21 and a winding tube 22 which is rotatable around a stationary axis of rotation 23. The blind screen 21 extends substantially in a first direction D1 and is connected to an operating beam 24. In an opposite second direction D2, the blind screen is connected to the winding tube 22. The blind screen 4 may be wound off and on the winding tube 22. The winding tube 22 is provided with wire pulleys 25, 25' on opposite outer ends, which wire pulleys 25, 25' rotate concentric with the winding tube 22 about axis 23.

For mounting on the respective outer ends of the winding tube 22 each wire pulley 25, 25' may have a tube support. At least one of the wire pulleys 25, 25' has a cavity into which an output shaft of a gearbox 26 may be provided. The inner surface of the cavity and the outer surface of the shaft correspond to provide a form locked connection. The inverse, a wire pulley with shaft and gearbox with corresponding cavity is also possible. A motor 27 is provided for driving rotation of the winding tube 22 via the gearbox 26.

The roller blind assembly 4 further includes two parallel arranged rollo guides 28, two reversal pulleys 29, and two tensioning wires 30,30'. Each tensioning wire 30, 30' runs respectively from one of the wire pulleys 25, 25' around one of the reversal pulleys 29, 29' towards the operating beam 24. Thereto, the reversal pulleys 29, 29' are rotatably attached to the respective guides 28, 28'. Each tensioning wire 30, 30' is attached to one respective wire pulley 25, 25' with a first end, such that it may be wound onto and off said wire pulley 25, 25'. The tensioning wires 30, 30' are guided through or may at least run through the parallel guides 28. Each wire pulley 25, 25', which is attached to a first end of the respective tensioning wire 30, 30', is further equipped with spiral grooves, such that the tensioning wire 30, 30' may be wound onto and off said wire pulley 25, 25' in a controlled manner. The grooves are provided on a sloped part of the wire pulley 25, 25' and run in a spiral manner over the outer surface of the pulley. The tensioning wires 30, 30' are attached to the operating beam 24.

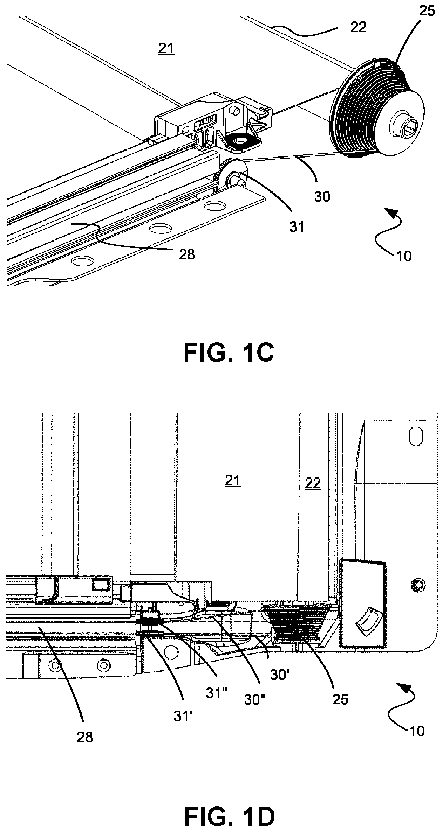

Fig. 1C illustrates an enlarged view of the wire pulley section 10 of the roller blind assembly 4 of Fig. 1B according to the prior art. The tensioning wire 30 can be seen more clearly in relation to the wire pulley 25 and the rollo guide 28. As can be seen, a guide wheel 31 is provided to guide the tensioning wire 30. In Fig. 1D, the wire pulley section 10 can be seen from above, thus in the XY-plane, showing simultaneously a first outer position of the tensioning wire 30' and the guide wheel 31' and a second outer position of the tensioning wire 30" and the guide wheel 31". A dashed line can be distinguished for each position wherein the dashed line is situated perpendicular to axle of the wire pulley 25. The tensioning wire 30',30" making an angle in relation to the dashed line.

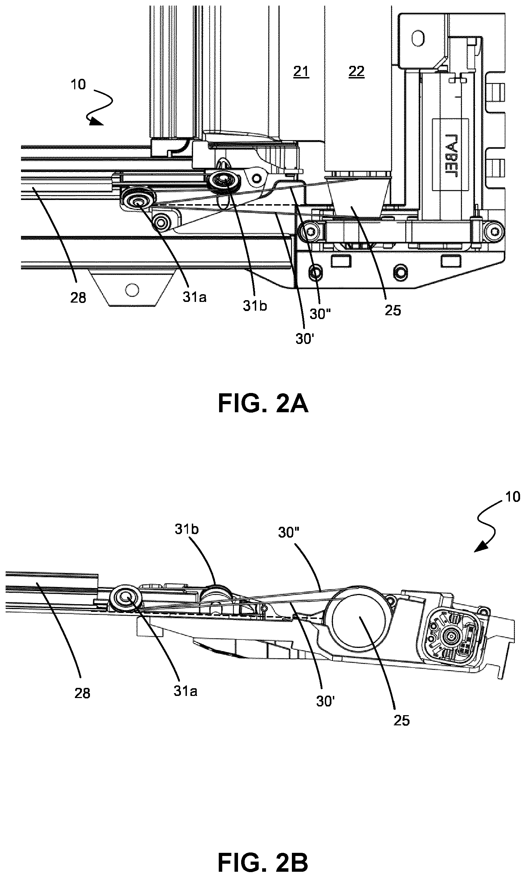

In Fig. 2A, an example wire pulley section 10 of the roller blind assembly 4 is shown in accordance with the present invention. The wire pulley section 10 of roller blind assembly 4 comprises a pair of guidance members 31a, 31b wherein the first guidance member 31a guides the tensioning wire 30',30" from the wire pulley 25 towards a second guidance member 31b. The second guidance member 31b guides the tensioning wire 30',30" from the first guidance member 31a towards the longitudinal guide rail 28. The first guidance member 31a is distanced further away from the wire pulley 25 than the second guidance member 31b. The tensioning wire 30',30" is shown simultaneously in a first outer position of the tensioning wire 30' and in a second outer position of the tensioning wire 30". The tensioning wire 30',30" makes an angle in relation to a dashed line shown and situated perpendicular to the axle of the wire pulley 25. By distancing the first guidance member 31a further away that the second guidance member 31b, an angle of at most 7° of the tensioning wire 30',30" in either of the outer positions can be created in relation to the dashed line while at the same time limiting the amount of space needed in the traversal direction for both of the guidance members 31a and 31b.

Fig. 2B shows a side view of the example wire pulley section 10 of the roller blind assembly 4 in accordance with the present invention as presented in Fig. 2A. A dashed line is drawn extending from a side of the first guidance member 31a where the tensioning wire 30',30" is guided towards the wire pulley 25 and extending to the wire pulley 25 wherein the dashed line is essentially parallel to the longitudinal guide rail 28. The tensioning wire 30',30" makes an angle in relation to a dashed line in the range of 5° to 25°.

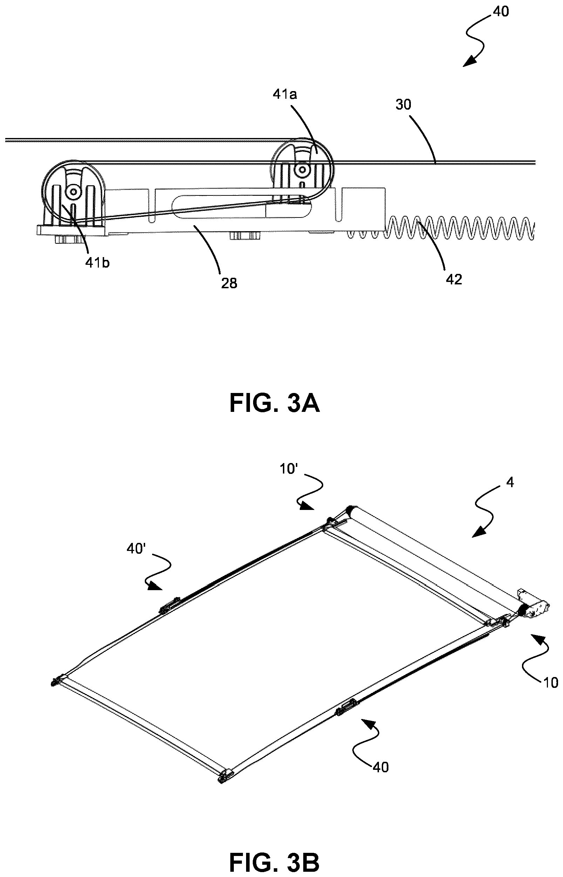

In Fig. 3A, an example spring assembly 40 of a roller blind assembly 4 in accordance with an embodiment of the present invention is shown wherein the spring assembly 40 is provided at a second end portion of the guide rail 28 comprising a pair of guiding members 41a, 41b for guiding the tensioning wire 30. The first guiding member 41a is fixed to a spring element 42. Spring element 42 preferably is fixed to a portion of the frame of roller blind assembly 4. The second guiding member 41b is attached to a part of guide rail 28. The first guiding member 41a may move freely within the longitudinal direction thereby expanding or contracting the spring element 42 while keeping tension on the tensioning wire 30.

Fig. 3B shows an example roof assembly 4 comprising a pair of wire pulley sections 10, 10' and a pair of spring assemblies 40, 40' according as shown in Fig. 3A. The wire pulley sections 10, 10' may be a convention wire pulley section or a wire pulley section according to any of the embodiments disclosed above.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in expectedly any appropriately detailed structure. In particular, features presented and described in separate de-pendent claims may be applied in combination and any advantageous combination of such claims are herewith disclosed.

Further, it is contemplated that structural elements may be generated by application of three-dimensional (3D) printing techniques. Therefore, any reference to a structural element is in-tended to encompass any computer executable instructions that in-struct a computer to generate such a structural element by three-dimensional printing techniques or similar computer-controlled manufacturing techniques. Furthermore, any such reference to a structural element is also intended to encompass a computer readable medium carrying such computer executable instructions.

Further, the terms and phrases used herein are not intended to be limiting, but rather to provide an understandable description of the invention. The terms "a" or "an", as used herein, are defined as one or more than one. The term plurality, as used here-in, is defined as two or more than two. The term another, as used herein, is defined as at least a second or more. The terms including and/or having, as used herein, are defined as comprising (i.e., open language). The term coupled, as used herein, is de-fined as connected, although not necessarily directly.

Although the present invention has been described above with reference to specific embodiments, it is not intended to be limited to the specific form set forth herein. Rather, the invention is limited only by the accompanying claims and other embodiments than the specific above are equally possible within the scope of these appended claims.

Furthermore, although exemplary embodiments have been described above in some exemplary combination of components and/or functions, it should be appreciated that, alternative embodiments may be provided by different combinations of members and/or functions without departing from the scope of the present disclosure. In addition, it is specifically contemplated that a particular feature described, either individually or as part of an embodiment, can be combined with other individually described features, or parts of other embodiments.

## Claims

1. A roller blind assembly for a vehicle, comprising:
a frame for mounting the roller blind assembly to a roof of a vehicle,
at least one guide rail provided on a side of the frame extending in a longitudinal direction,
a winding tube provided at a rear side of the frame extending in a transversal direction substantially perpendicular to the at least one guide rail,
a blind screen having a first end attached to the winding tube to be wound onto and off said winding tube in a mainly longitudinal direction,
an operating beam attached to a second end of the blind screen,
at least one wire pulley attached to an outer end of the winding tube, and
a tensioning wire having a first end attached to the wire pulley and a second end attached to the operating beam to be wound onto and off said wire pulley,
**characterized in that** a set of guidance members for guiding the tensioning wire is provided at an end portion of the guide rail near the wire pulley,
wherein a first guidance member guides the tensioning wire from the wire pulley towards a second guidance member,
wherein the second guidance member guides the tensioning wire from the first guidance member towards the operating beam through the longitudinal guide rail, and
wherein the first guidance member is distanced further away from the wire pulley than the second guidance member such that an angle at which the tensioning wire runs to and from the wire pulley is limited to a controlled range during winding and unwinding of the tensioning wire.

2. A roller blind assembly according to claim 1, wherein two guide rails are provided, one on each side of the frame extending in a longitudinal direction and opposite of each other.

3. A roller blind assembly according to claim 2, wherein two wire pulleys are provided, one on each side of the winding tube, and wherein two tensioning wires are provided, each attached to one of the wire pulleys, and wherein two sets of guidance members are provided, each set provided at an end portion of each guide rail.

4. A roller blind assembly according to claim 1, wherein the angle of the tensioning wire with the wire pulley within the XY-plane preferably ranges from 0° to 7° in the XY-plane.

5. A roller blind assembly according to claim 1, wherein the angle of the tensioning wire with the wire pulley within the XZ-plane preferably is in the range from 5° to 25° in the XZ-plane.

6. A roller blind assembly according to claim 1, wherein the set of guidance members are a set of guiding wheels which may move along a longitudinal direction, a transversal direction or both.

7. A roller blind assembly according to claim 1, wherein the operating beam comprises a spring element and wherein the tensioning wire is attached to the spring element.

8. A roller blind assembly according to claim 1, wherein a spring assembly is provided at a second end portion of the guide rail comprising a pair of guiding members for guiding the tensioning wire wherein a first guiding member is fixed to a spring element and a second guiding member attached to the guide rail, the spring element being fixed to a portion of the frame.

9. A roller blind assembly according to claim 8, wherein the first guiding member and the spring element are provided in a guiding channel of the frame suitable for guiding a wind deflector mechanism.

10. A roof assembly for a vehicle comprising the roller blind assembly of any of the preceding claims, wherein the roof assembly further comprises an at least partly transparent roof panel.

11. A roof assembly according to claim 10, wherein the roof panel is a fixed glass panel.

12. A roof assembly according to claim 10, wherein the roof panel is a movable glass panel.

13. A vehicle comprising the roof assembly according to any of claims 10 to 12.
